# FASCICULE DE BREVET EUROPEEN

(11) **EP 1 044 304 B1**
(45) Date de publication et mention de la délivrance du brevet: **02.10.2002**
(21) Numéro de dépôt: 98963633.7
(22) Date de dépôt: 24.12.1998
(51) Int. Cl.: D21H 27/28, B44C 5/04, D21H 17/68

(54) **FEUILLE PAPETIERE DECORATIVE COMPRENANT UNE COMPOSITION DE DIOXYDE DE TITANE ET STRATIFIE DECORATIF**
TITANDIOXIDZUSAMMENSETZUNG ENTHALTENDES DEKORATIONSPAPIER UND DEKORATIVE SCHICHTSTOFFPLATTE
DECORATIVE PAPER SHEET COMPRISING A TITANIUM DIOXIDE COMPOSITION AND DECORATIVE LAMINATE

(30) Priorité: 30.12.1997 FR 9716656
(43) Date de publication de la demande: 18.10.2000
(73) Titulaire: ARJO WIGGINS, 92130 Issy Les Moulineaux (FR)
(72) Inventeur: SIMON, Christophe, F-88380 Arches (FR); STERBE, Daniel, F-88380 Arches (FR); CAULET, Pierre, F-38850 Charavines (FR)
(86) Numéro de dépôt international: FR9802875
(87) Numéro de publication internationale: WO99035335

(56) Documents cités:
- EP-A- 0 573 150
- WO-A-89/08739
- GB-A- 2 234 990
- US-A- 2 943 013
- US-A- 4 461 810

## Description

L'invention concerne des feuilles papetières décoratives utilisées dans la fabrication des panneaux ou profilés décoratifs stratifiés. L'invention concerne notamment des feuilles décoratives imprégnables par une résine thermodurcissable ainsi que les feuilles imprégnées obtenues, appelées "films décoratifs". Elle concerne aussi les feuilles décoratives dites feuilles finies. Elle concerne par ailleurs les procédés de fabrication des feuilles ainsi que les panneaux ou profilés décoratifs stratifiés les comportant.

Depuis de nombreuses années, on emploie des panneaux ou profilés décoratifs stratifiés (encore appelés « stratifiés ») comme matériaux dans les habitations et les locaux commerciaux et industriels. Des applications typiques de tels stratifiés sont les revêtements des meubles, des dessus de table, des chaises et autres ou les revêtements de sol comme en particulier les revêtements imitant le parquet.

Il existe trois grandes sortes de « stratifiés » décoratifs : les panneaux ou profilés décoratifs recouverts d'une feuille décorative adhésive, les « stratifiés » dits haute pression et les « stratifiés » dits basse pression.

Les panneaux ou profilés décoratifs sont constitués par les panneaux composés d'un support de base, en général un panneau de particules de bois ou de fibres agglomérées, et d'une feuille de papier décorative imprégnée d'une composition, appelée feuille finie, fixée sur le support au moyen d'un adhésif.

La feuille de papier est une feuille décorative comprenant entre 40 à 90 % de fibres cellulosiques courtes et 10 à 60 % de fibres cellulosiques longues, la somme faisant 100 en poids, entre 0.2 et 1 %, en poids sec du papier imprégné, d'un agent de résistance humide, entre 0.1 et 20 %, en poids sec du papier imprégné, de charges minérales et/ou organiques opacifiantes et/ou colorantes. La feuille est de couleur uniforme ou comporte des motifs décoratifs. Comme charges opacifiantes on utilise notamment le dioxyde de titane et de préférence à un taux de 10 à 20 %. De plus des motifs décoratifs peuvent être appliqués par impression sur la feuille, avant ou après imprégnation. On applique en plus un vernis ou une laque qui a pour but de protéger la surface de la feuille.

Ces feuilles sont le plus souvent imprégnées à l'aide d'une presse encolleuse ou d'un autre dispositif d'imprégnation sur une machine à papier ou hors machine à papier, à un taux de 15 à 30 % en poids sec du papier imprégné, avec des compositions comportant des dispersions aqueuses à base de copolymère styrène-acrylate d'alkyle et d'une solution aqueuse de résines thermodurcissables comportant du formaldéhyde comme les résines mélamine-formaldéhyde ou urée-formaldéhyde. Récemment on a proposé d'imprégner la feuille avec une composition exempt de formaldéhyde, cette composition comprend, de préférence 95 à 50 parts en poids sec, d'un polymère réticulable et ayant une température de transition vitreuse comprise entre -10 et 35°C, utilisé sous forme d'une dispersion aqueuse stable, ou d'un copolymère styrène-acrylate d'éthyle-acrylate de butyle et d'un liant choisis de préférence parmi les poly(alcool de vinyle), la gélatine, les amidons, les dérivés de cellulose, les alginates à un taux de préférence de 5 à 50 parts en poids sec, la somme des parts respectives étant égale à 100.

De telles feuilles sont décrites dans les demandes de brevet WO-A- 93/01549 et WO-A-93/01275.

Les feuilles imprégnées en ligne sur machine à papier sont dites préimprégnées et celles imprégnées hors ligne sont dites post-imprégnées.

Il est important que la feuille obtenue, dite feuille finie, soit bien opaque afin que l'on ne voit pas le support à travers. Il faut aussi que la tenue à la lumière, du fait de leur exposition, soit élevée; elle est de préférence supérieure ou égale à 6 sur l'échelle des bleus selon la norme ISO 4586-2.16. C'est pourquoi les pigments de dioxyde de titane utilisés sont en fait des pigments dont la surface a été traitée par des oxydes du silicium ou de l'aluminium ou du phosphore ou encore de cérium, de zinc ou de zirconium en mélange éventuellement, à un taux d'environ 5 à 10 % en poids. Plus précisément il s'agit de particules de silice, d'alumine et de phosphate. Ce traitement permet aussi de régler l'ionicité des pigments. Un traitement de surface de ce type a par exemple été décrit dans le brevet US-A-4461810. Dans la demande de brevet GB-A-2234990, on a aussi décrit le traitement de surface d'un dioxyde de titane anatase et d'un kaolin pour améliorer leur tenue à la lumière.

On produit les stratifiés décoratifs dits haute pression à partir d'une âme constituée de feuilles imprégnées de résine. Ces feuilles sont généralement en papier kraft et ont été imprégnées d'une résine thermodurcissable, le plus souvent d'une résine phénolique.

Après avoir imprégné les feuilles de résine, on les sèche, on les découpe, puis on les empile les unes sur les autres. Le nombre de feuilles dans la pile dépend des applications et varie entre 3 et 9, mais peut être supérieur.

On place ensuite sur la pile de feuilles constituant l'âme, une feuille décorative. En général, on place au-dessus de la feuille décorative, une feuille protectrice de recouvrement, dite "overlay", dépourvue de motif et transparente dans le stratifié final, pour améliorer la résistance à l'abrasion du stratifié.

On place ensuite la pile de feuilles imprégnées dans une presse à stratifier dont les plateaux sont munis d'une tôle conférant l'état de surface au stratifié. Puis, on densifie la pile par chauffage, à une température de l'ordre de 110°C à 170°C, et par pressage, à une pression de l'ordre de 5,5 MPa à 11 MPa, pendant environ 25 à 60 minutes, pour obtenir une structure unitaire.

On fixe ensuite cette structure sur un support de base, par exemple en la collant sur ledit support tel qu'un panneau de particules agglomérées, notamment de particules de bois agglomérées.

On produit les stratifiés décoratifs dits basse pression en utilisant uniquement une feuille décorative imprégnée de résine thermodurcissable, et éventuellement une feuille overlay, que l'on stratifié directement sur le support de base tel qu'un panneau pendant un cycle court, la température étant de l'ordre de 160 à 175°C et la pression de 1,25 MPa à 3 MPa.

La feuille décorative imprégnable utilisée pour la fabrication de ces deux sortes de stratifiés, basse et haute pression, est en général une feuille de papier réalisée sur machine à papier et qui comporte des fibres de cellulose et éventuellement des fibres synthétiques, les fibres de cellulose se répartissant, en poids, entre 40 à 100 %, de préférence 80 à 100 %, en fibres courtes et entre 0 à 60 %, de préférence 0 à 20 %, en fibres longues, 0,2 à 1 % en poids sec par rapport à la feuille, de préférence 0,4 à 0,5 %, d'un agent de résistance humide, et 5 à 50 %, en poids sec par rapport à la feuille, de particules décoratives par exemple des pigments iridescents, et/ou de colorants pigmentaires ou organiques, et/ ou de charges opacifiantes comme le dioxyde de titane, notamment de type rutile, ladite charge opacifiante comme le dioxyde de titane étant en quantités de préférence d'au moins 15%, en général, comprises entre environ 15 à 40 % par rapport au poids de la feuille. Elle peut contenir aussi d'autres additifs usuellement employés en papeterie et en particulier des agents de rétention ou des agents spécifiques tels que des produits alcalins permettant de contrôler des caractéristiques comme le postformage.

On peut par ailleurs imprimer un décor sur cette feuille, par exemple une imitation bois ou tout autre décor fantaisie.

Cette feuille est ensuite imprégnée d'une résine thermodurcissable mais stable thermiquement (ne jaunissant pas), le plus souvent par des résines de mélamine-formaldéhyde ou des résines d'urée-formaldéhyde, ou parfois des résines de benzoguanamine-formaldéhyde, des résines de polyester insaturé.

Dans une seconde étape, la feuille imprégnée est chauffée et la résine est partiellement réticulée (thermodurcie) afin que la résine ne soit plus dans un état collant et que la feuille soit manipulable. Une telle feuille décorative imprégnée de résine partiellement réticulée est appelée, en termes de métier, "film décor" ou "film décoratif' ou encore "film mélaminé".

Cette seconde étape est généralement réalisée en portant la feuille à des températures d'environ 110 à 140 °C et est contrôlée, de façon à ce que la résine lors de la stratification finale du film décor flue correctement dans la feuille, par la mesure du taux de volatils restant dans le film décor. En effet ce film décor comporte alors un certain pourcentage, de l'ordre de 5 à 8 %, de produits volatils (eau solvant de la résine, eau résultant de la condensation chimique de la résine, le formaldéhyde résiduel, les autres produits résiduels). Ces volatils représentent les composés qui seront éliminés lors de la réticulation totale de la résine, pendant la stratification du film décor.

La résine, une fois totalement thermodurcie, après stratification, apportera de la résistance de surface au stratifié final (résistance à l'abrasion, résistance à la salissure, à la vapeur d'eau et aux agents chimiques comme les solvants, les acides et les bases, etc... ).

Par ailleurs, cette feuille, une fois stratifiée, doit avoir une tenue à la lumière très élevée car elle est exposée en quasi-permanence aux rayonnements lumineux de par son usage de recouvrement de surface, les composés qui la constituent doivent donc être sélectionnés de manière à obtenir cette tenue lumière, de préférence supérieure ou égale à 6 sur l'échelle des bleus selon la norme ISO 4586-2.16. Les pigments de dioxyde de titane utilisés sont en fait du même type que ceux utilisés dans le cas de la feuille finie.

De plus, cette feuille doit permettre d'obtenir un film décor opaque après stratification. Il est en effet important, comme dans le cas de la feuille finie, que l'on ne voit pas le support de base et/ou les feuilles de papier kraft sur lequel ou lesquelles on a stratifié la feuille décorative imprégnée, à travers ladite feuille, afin qu'il n'y ait pas d'interférence avec le décor de la feuille. Il faut donc avoir une feuille décorative donnant le plus d'opacité possible.

Dans le cas d'un décor blanc, pour lequel on utilise une charge opacifiante très blanche comme le dioxyde de titane, on est alors contraint d'utiliser de grandes quantités de charges comme le dioxyde de titane (environ 40 % en poids par rapport à la feuille) pour obtenir cette opacité. En effet, après imprégnation et stratification, seul le dioxyde de titane apporte de l'opacité car, du fait que la cellulose présente un indice de réfraction proche de celui de la résine, les fibres de cellulose sont rendues transparentes, et cela d'autant plus que la quantité de résine est importante.

Il faut donc mettre le plus possible de charge comme le dioxyde de titane mais ceci est onéreux et défavorable aux caractéristiques mécaniques de la feuille.

L'un des paramètres qui intervient dans le pouvoir opacifiant d'un pigment est son pouvoir de diffusion. L'une des caractéristiques du pigment qui est liée à cette diffusion est la granulométrie et à la forme du pigment opacifiant. Dans le cas des pigments de dioxyde de titane, leur granulométrie est d'environ 0,2 à 0,3 µm.

L'autre caractéristique qui influence la diffusion de la lumière est l'indice de réfraction. Plus la différence entre les indices de réfraction d'un pigment et de son milieu (ici la résine thermodurcissable ou une composition d'imprégnation de feuille finie) est grande, meilleure est la diffusion de la lumière et donc l'opacité. Dans le cas des pigments de dioxyde de titane de type rutile il est de 2,7 alors que l'indice de réfraction des fibres de cellulose est d'environ 1,5. On préfère le dioxyde de titane de type rutile à celui de type anatase car son indice de réfraction est le plus élevé, celui de l'anatase n'étant que de 2,55.

Pour améliorer le pouvoir opacifiant d'un pigment, il a été constaté qu'il est préférable que lesdits pigments soient séparés, c'est pourquoi il est usuel de lui adjoindre des particules, appelées extendeurs. Les extendeurs du dioxyde de titane sont choisis parmi les silicoaluminates, la silice, le talc ou les kaolins notamment le kaolin calciné. Ces extendeurs sont en général sous forme d'agrégats et ont une granulométrie supérieure à celle du dioxyde de titane, ils font entre environ 1 et 10 µm de diamètre.

L'utilisation d'extendeur du dioxyde de titane est décrite dans l'article "A comparison of structured pigments for titanium dioxyde extension", TAPPI JOURNAL, Avril 1993, pages 70-76. Plus spécifiquement dans le domaine des panneaux décoratifs stratifiés, on a décrit dans la demande de brevet WO 1-A-89/08739, l'utilisation d'une silice amorphe précipitée particulière pour remplacer 5 à 40 % du dioxyde de titane afin d'obtenir des feuilles imprégnables de résine thermodurcissables pour constituer l'âme d'un stratifié décoratif. Cette silice joue le rôle d'extendeur du dioxyde de titane.

Dans la demande de brevet EP-A-573150, on a décrit une composition pigmentaire comprenant l'association de deux pigments, en particulier de dioxyde de titane et de silice, grâce à leurs charges électriques de surface différentes. Cette composition n'est soumise à aucun traitement ultérieur.

Cependant il s'avère nécessaire d'améliorer encore l'opacité des feuilles décoratives tout en conservant une bonne tenue à la lumière.

L'invention vise à résoudre ces problèmes et a donc pour but de fournir une feuille papetière décorative utilisable dans les stratifiés décoratifs, ladite feuille conduisant à une opacité élevée du stratifié décoratif final tout en lui conservant une bonne tenue à la lumière.

La demanderesse a trouvé que le but de l'invention est atteint si la feuille papetière comporte comme pigments opacifiants des pigments d'une composition de dioxyde de titane et de silice sous forme de flocs minéraux mixtes mûris.

Comme le montrent les exemples ci-dessous, il est en effet surprenant que l'on obtienne un effet relatif à l'opacité supérieur à l'effet obtenu en utilisant des extendeurs et du dioxyde de titane séparément.

Plus précisément, l'invention fournit une feuille papetière décorative utilisable dans la fabrication des panneaux ou profilés décoratifs, comprenant de 5 à 50 %, en poids sec par rapport à la feuille, d'une composition de dioxyde de titane TiO₂ et de silice SiO₂ sous la forme de flocs minéraux mixtes dans lesquels des particules de TiO₂ sont espacées les unes des autres par des agrégats de SiO₂, lesdits flocs ayant été mûris à une température suffisante pour renforcer la solidité des liaisons établies entre les particules de TiO₂ et les particules et/ou aggrégats de SiO₂, conformément à la revendication 1.

La durée du chauffage est d'au moins 30 minutes et le cas échéant elle peut être prolongée jusqu'à trois heures.

Au sens de l'invention, on entend désigner sous le terme floc, des agglomérats mixtes des deux espèces minérales TiO₂ et SiO₂. Ces agglomérats résultent de l'association entre des particules de TiO₂ et des particules ou d'agrégats de particules SIO₂ qui viennent s'intercaler entre les particules de TiO₂.

La cohésion interne des flocs minéraux mixtes, issus de l'association au TiO₂ d'un agent espaceur inorganique comme la silice repose sur la solidité de liaisons ioniques établies entre le TiO₂ et l'agent espaceur. Cette cohésion découle directement du procédé pour préparer lesdits flocs mixtes. Plus précisément, ces flocs sont obtenus dans des conditions opératoires telles que le TiO₂ et l'agent espaceur SiO₂ présentent des charges de surface opposées et significativement différentes. En particulier, le TiO₂ et l'agent espaceur considéré se doivent de posséder des points isoélectriques suffisamment différents pour qu'il puisse exister une plage de pH dans laquelle ces deux espèces minérales possèdent des charges opposées. Dans ces conditions, les deux espèces minérales manifestent l'une vis-à-vis de l'autre une attraction électrostatique. Les forces d'attraction résultantes doivent être suffisantes pour d'une part conduire à un agencement structural des deux composés et d'autre part, pour les stabiliser sous cette forme. Un mûrissement des flocs ainsi réalisés est nécessaire afin de consolider les interactions chimiques voire stériques établies au sein des flocs minéraux mixtes. Il est vraisemblable que certaines des liaisons ioniques soient converties en liaisons covalentes à l'issue de cette étape de mûrissement. Il est en effet nécessaire de consolider ces flocs afin de pouvoir les conserver en l'état et de leur conférer une résistance aux phénomènes de cisaillements ou d'autres phénomènes pouvant conduire à une déstabilisation des flocs comme une interaction avec des agents ayant un effet floculant, phénomènes se produisant lors de l'introduction desdits flocs dans une composition papetière ou à des phénomènes de déstabilisation pouvant avoir lieu lors de l'égouttage ou le séchage de la feuille de papier les comportant.

En ce qui concerne le point isoélectrique, il correspond au pH pour lequel la particule de l'espèce minérale considérée a une charge de surface globalement nulle. Pour un pH supérieur à cette valeur, la charge est globalement négative et pour un pH inférieur, la charge est globalement positive.

Le procédé de préparation d'une dite composition à base de TiO₂ et de silice selon l'invention comprend les étapes selon lesquelles :
a) on mélange à une dispersion aqueuse de TiO₂, une dispersion aqueuse de silice SiO₂, le mélange des deux dispersions étant effectué sous agitation et à pH compris entre les points isoélectriques respectifs desdits TiO₂ et SiO₂ et choisi de telle manière que lesdits TiO₂ et SiO₂ possèdent des charges de surface opposées et suffisamment différentes pour conduire, sous l'effet de forces électrostatiques, à leur agencement en des flocs minéraux mixtes dans lesquels les particules de TiO₂ sont globalement espacées les unes des autres par des agrégats de SiO₂, notamment entre 4,5 et 6,5, de préférence de l'ordre de 5,5.
b) on régule le cas échéant, le pH à la valeur fixée en étape 1, notamment à environ 5,5
c) on mûrit la dispersion aqueuse de flocs minéraux mixtes résultante à une température suffisante pour renforcer la solidité des liaisons établies entre les particules de TiO₂ et les particules et/ou agrégats de SiO₂, notamment à une température entre 60°C et 100°C pendant au moins 30 minutes.
d) on récupère ladite composition sous forme d'une dispersion aqueuse de flocs minéraux mixtes et,
e) éventuellement, on formule ladite composition sous une forme sèche.

Lesdits flocs obtenus peuvent ensuite être micronisés, c'est-à-dire que lesdits flocs après avoir été fabriqués tels que décrit précédemment et avoir été séchés, sont désagglomérés par une étape de broyage à jet d'air (micronisation) afin de pouvoir être convenablement dispersés lors de leur incorporation dans une composition papetière.

Les flocs minéraux mixtes composant la composition attendue, se forment donc sous agitation desdites dispersions, généralement à température ambiante et à un pH tel que défini précédemment. Il peut le cas échéant, être nécessaire de procéder en cours de réaction à un ajustement du pH pour le maintenir à une valeur propice à la formation desdits flocs. L'attraction est immédiate. Toutefois, il est préférable de maintenir l'agitation pendant environ 15 minutes de façon à stabiliser le système avant l'étape de mûrissement.

La dispersion aqueuse de TiO₂ mise en oeuvre dans le procédé comprend environ 5 à 80% en poids de TiO₂ et de préférence environ 5 à 40%. A cet égard, le point limitant est la viscosité de la suspension qui doit rester à une valeur raisonnable pour être aisément manipulable.

La silice peut être introduite soit sous forme d'une dispersion aqueuse de particules de silice de type slurry ou être générée in situ par acidification d'une solution de silicates.

Dans le cas particulier où l'on précipite la silice in situ dans la dispersion de TiO₂ il est procédé, après l'étape de précipitation, à un ajustement du pH du milieu réactionnel, à une valeur propice à la manifestation des forces électrostatiques entre le TiO₂ et la silice ainsi générée et qui sont donc nécessaires à leur hétérocoagulation.

Comme explicité ci-dessus, les conditions opératoires propices à la manifestation du phénomène d'hétérocoagulation entre l'agent espaceur inorganique SiO₂ et le TiO₂ sont notamment le choix d'un pH dans une plage définie par leurs points isoélectriques respectifs. Il convient de choisir ce pH de telle manière que les deux composés aient des charges de surface opposées et suffisamment différentes. Pour des raisons de mise en oeuvre, il est souhaitable que les points isoélectriques de l'agent espaceur et du TiO₂ soient espacés d'au moins une unité pH.

L'emploi de la silice à titre d'agent espaceur conformément à la présente invention est avantageux à plusieurs titres. Tout d'abord, elle possède un point isoélectrique aux environs de 2 soit une valeur suffisamment différente de celle du point isoélectrique de la forme cationique du TiO₂ (6,5 à 7). Par ailleurs, la silice présente l'avantage de ne pas absorber de manière significative la lumière du visible ce qui est favorable en terme de blancheur de la feuille.

De préférence, le dioxyde de titane a une tenue à la lumière élevée. Il s'agit notamment d'un dioxyde de titane de type rutile. De façon appropriée, les particules de TiO₂ ont une taille de 0.1 à 1 µm.

Dans un mode de réalisation particulier, le dioxyde de titane TiO₂ est revêtu d'un traitement de surface minéral et éventuellement les flocs minéraux mixtes sont aussi revêtus d'un traitement de surface. Plus particulièrement, le traitement de surface comprend un composant choisi parmi les alumine, silice, zircone, phosphate, oxyde de cérium, oxyde de zinc, oxyde de titane et leurs mélanges. Plus particulièrement encore, le traitement de surface représente environ 5 à 20% par rapport au poids total des flocs minéraux mixtes.

De préférence, la silice SiO₂ est utilisée à raison de 1 à 20 %, de préférence 5 à 15 %, en poids par rapport au poids de TiO₂. Plus particulièrement, la silice SiO₂ est utilisée à raison d'environ 10% à 15% en poids par rapport au poids de TiO₂.

De préférence, le TiO₂ est un TiO₂ rutile cationique.

Dans un mode de réalisation avantageux, la silice possède une surface spécifique comprise entre 20 et 300 m²/g. On utilise en particulier une silice se présentant sous la forme d'agrégats de taille comprise entre 0,5 et 10 µ, de préférence entre 0.5 et 2 µm.

Selon un mode de réalisation préférée de l'invention, le grammage de la feuille est de 40 à 150 g/m², de préférence de 60 à 100 g/m².

D'autres caractéristiques des feuilles décoratives selon la présente invention sont définies dans les revendications annexées.

De préférence les charges opacifiantes à base de ladite composition dudit dioxyde de titane et de silice sont présentes à un taux de 8 à 45 % en poids sec de la feuille. D'autres charges blanches comme le kaolin ou le talc et/ou des colorants pigmentaires peuvent être utilisés en complément avec ledit dioxyde de titane.

Dans un mode de réalisation, la feuille de papier selon l'invention comprend : des fibres cellulosiques et éventuellement des fibres synthétiques, les fibres de cellulose se répartissant en poids entre 40 à 100 %, de préférence 60 à 100 %, en fibres courtes et entre 0 à 60 %, de préférence 0 à 40 %, en fibres longues, 0.2 à 1 %, de préférence 0,4 à 0,6 %, d'un agent de résistance humide en poids sec par rapport au poids de la feuille.

La présente invention a également pour objet un procédé de fabrication par voie humide de ladite feuille décorative qui se caractérise en ce qu'il comprend les étapes suivantes:
- sur une machine à papier, on forme une feuille, à partir d'une suspension aqueuse de fibres de cellulose et éventuellement de fibres synthétiques, et 5 à 50 % en poids sec par rapport à la feuille de ladite composition de dioxyde de titane et de silice sous la forme de flocs et éventuellement d'autres additifs usuellement employés pour ces feuilles,
- on l'essore, et on la sèche.

Selon un cas particulier, le procédé comprend les étapes suivantes :
- sur une machine à papier, on forme une feuille, à partir d'une suspension aqueuse de fibres de cellulose et éventuellement de fibres synthétiques, ces fibres se répartissant entre 40 à 100 %, de préférence 60 à 100 %, en fibres courtes et entre 0 à 60 %, de préférence 0 à 20 %, en fibres longues, 0,2 à 1 %, de préférence 0,4 à 0,6 %, d'un agent de résistance humide en poids sec par rapport à la feuille, et 5 à 50 %, en poids sec par rapport à la feuille, de ladite composition de dioxyde de titane et de silice et éventuellement d'autres additifs usuellement employés pour ces feuilles,
- on essore et on sèche la feuille.

Selon un cas particulier de l'invention, lesdits flocs ont été micronisés, c'est-à-dire que lesdits flocs après avoir été fabriqués tels que décrit précédemment et avoir été séchés, ont été désagglomérés par une étape de broyage à jet d'air (micronisation) afin de pouvoir être convenablement dispersés lors de leur incorporation dans une composition papetière.

Selon un autre cas particulier, ladite composition desdits flocs de dioxyde de titane et de silice est introduite telle qu'obtenue en milieu aqueux.

Selon un cas particulier, l'invention fournit aussi un procédé de fabrication d'une feuille décorative imprégnée d'une résine thermodurcissable partiellement réticulée (film décoratif) qui se caractérise en ce qu'on utilise une feuille papetière telle que précédemment décrite, que l'on imprègne ladite feuille avec une résine thermodurcissable et que l'on réticule partiellement la résine, le taux de composés volatils étant compris entre 5 et 8 % en poids de la feuille.

En particulier la résine thermodurcissable est choisie parmi les résines mélamine-formaldéhyde, les résines urée-formaldéhyde ou parmi les résines benzoguanamine-formaldéhyde, les résines de polyester insaturé ou leurs mélanges.

L'invention concerne aussi une feuille décorative imprégnée dite feuille finie ainsi que son procédé de fabrication. Dans un mode de réalisation la feuille décorative imprégnée comprend une feuille papetière de base comprenant entre 40 à 90% de fibres cellulosiques courtes et 10 à 60% de fibres longues, la somme faisant 100 en poids, entre 0,2 et 1%, en poids sec du papier imprégné, d'un agent de résistance humide, entre 5 et 25% en poids sec du papier imprégné, de ladite composition de dioxyde de titane et de silice selon l'invention, et ladite feuille papetière étant imprégnée, à un taux de 15 à 30 % en poids sec du papier imprégné, d'une composition d'imprégnation choisie parmi les mélanges comprenant une résine thermodurcissable et les copolymères styrène-acrylate d'alkyle.

Selon un autre mode de réalisation de la feuille finie la composition d'imprégnation comprend en mélange 5 à 50 parts en poids sec d'un liant choisi parmi les poly(alcool de vinyle), la gélatine, les amidons, les dérivés de cellulose, les alginates et leurs mélanges et 95 à 50 parts en poids sec d'un polymère réticulable présentant une température de transition vitreuse comprise entre -10 et 35°C et utilisé sous forme d'une dispersion aqueuse stable ou d'un copolymère styrène-acrylate d'éthyle-acrylate de butyle, la somme des parts faisant 100.

L'invention a aussi pour objet un panneau ou profilé décoratif stratifié qui se caractérise par le fait qu'il comporte comme feuille décorative l'une des feuilles comme décrit précédemment. Plus particulièrement, le panneau ou profilé décoratif selon l'invention comporte un support de base comme un panneau de particules ou de fibres agglomérées et
- soit une dite feuille décorative selon l'invention, fixée à l'aide d'un adhésif ou stratifiée directement à sa surface,
- soit une structure unitaire constituée de feuilles de papier kraft imprégnées d'une résine thermodurcissable et une dite feuille décorative imprégnée d'une résine thermodurcissable selon l'invention, l'unité étant fixée à l'aide d'un adhésif à la surface dudit stratifié.

D'autres caractéristiques de l'invention sont définies dans les revendications annexées.

L'invention sera mieux comprise à l'aide des exemples non limitatifs suivants :

### EXEMPLES :

### EXEMPLE 1 COMPARATIF :

Etape 1 : On réalise une feuille de papier témoin à usage décoratif selon l'art antérieur :
Sur une machine à papier de type Foudrinier, on réalise une feuille de papier en mélangeant en masse, à une suspension de fibres de cellulose en milieu aqueux, 0.5 % en poids sec par rapport à la feuille d'un agent de résistance humide (une résine polyamide-polyamine-épichlorhydrine), des pigments de dioxyde de titane en quantités telles qu'ils soient présents à raison d'environ 38 % en poids dans le papier. Le taux de dioxyde de titane est déterminé par le taux de cendres à 800°C, le dioxyde de titane étant le seul composé minéral donc incombustible dans le papier, en dehors des résidus dans la pâte (en quantités très faibles).
Le dioxyde de titane est de type rutile grade lamifié c'est-à-dire qu'il comporte un traitement de surface avec environ 8 % de phosphate-alumine (P₂O₆/Al₂O₃) avec un potentiel Zeta positif à pH 6, pour obtenir une bonne tenue lumière du pigment et régler l'ionicité de surface du pigment. Il s'agit du pigment de TiO₂ rutile cationique commercialisé sous la marque Rhoditan RL 62 par Rhône Poulenc.
Sa dimension moyenne est d'environ 0,3µm.
On forme et on sèche la feuille.

Etape 2 : A l'aidé d'une imprégnatrice de laboratoire, on imprègne la feuille de résine thermodurcissable (mélamine-formaldéhyde) en solution aqueuse. Ensuite on sèche la résine pour obtenir une résine avec un taux de volatils de 6,5 % en poids. Le taux de volatils est déterminé en chauffant la feuille imprégnée de résine à 160°C pendant cinq minutes, il correspond au rapport de la différence du poids de la feuille à la sortie de l'étuve et de son poids avant l'entrée en étuve sur le poids avant l'entrée en étuve.

Etape 3 : On réalise, en laboratoire, une plaque de papiers stratifiés de type haute pression en empilant cinq feuilles de papier kraft déjà imprégnées d'une résine phénolique thermodurcissable et la feuille obtenue que l'on place sur le haut de la pile. On soumet l'ensemble à une température de 150 °C pendant 40 minutes sous une pression de 10 MPa.

### EXEMPLE 2 COMPARATIF :

Etape 1 : On réalise une feuille de papier témoin à usage décoratif selon l'art antérieur en utilisant un agent extendeur du dioxyde de titane:
Sur une machine à papier de type Foudrinier, on réalise une feuille de papier en mélangeant en masse, à une suspension de fibres de cellulose en milieu aqueux, 0,5 % en poids sec par rapport à la feuille d'un agent de résistance humide (une résine polyamide-polyamine-épichlorhydrine), des pigments de dioxyde de titane grade lamifié en quantités telles qu'ils soient présents à raison d'environ 36 % en poids dans le papier en mélange avec un extendeur en quantités telles qu'ils soient présents à raison d'environ 2 % en poids dans le papier.
Le dioxyde de titane est le même que celui utilisé à l'exemple 1.
L'agent extendeur est du kaolin calciné.
On sèche la feuille.
On procède aux étapes 2 et 3 comme à l'exemple 1.

### EXEMPLE 3 COMPARATIF:

On procède comme à l'exemple 2 mais le dioxyde de titane grade lamifié est à un taux de 38 %.

### EXEMPLE 4 :

Etape 1 : On réalise une feuille de papier à usage décoratif selon l'invention :

Sur une machine à papier de type Foudrinier, on réalise une feuille de papier en mélangeant en masse, à une suspension de fibres de cellulose en milieu aqueux, 0,5 % en poids par rapport à la feuille d'un agent de résistance humide (une résine polyamide-polyamine-épichlorhydrine), une composition de flocs des pigments de dioxyde de titane grade lamifié et de silice en quantités telles qu'ils soient présents à raison d'environ 38 % en poids dans le papier.

Les flocs minéraux mixtes TiO₂/SiO₂ sont réalisés par hétérofloculation des particules de TiO₂ avec les agrégats de silice.

Le processus d'hétérocoagulation consiste donc à ajouter à pH régulé le slurry de silice dans un pied de cuve agité contenant la suspension de TiO₂ (suspension aqueuse de pigments RL 62 titrant à 40g/l). Le pH d'hétérocoagulation peut être choisi entre 4,5 et 6,5 mais il est préférable de travailler à pH = 5,5, le pH est régulé en ajoutant simultanément au slurry de silice une solution d'acide chlorhydrique. Cette opération a lieu à température ambiante. La suspension finale contient 10% en masse de silice par rapport à la teneur en pigment TiO₂ et l'extrait sec global (TiO₂ + SiO₂) est d'environ 11%.

Après un contact de 16 minutes à pH régulé de 5,5 la suspension, toujours agitée, est portée à une température comprise entre 60°C et la température d'ébullition pendant 1 à 3 heures puis refroidie à température ambiante.

La feuille de papier obtenue est traitée selon l'étape 2 d'imprégnation avec la résine thermodurcissable et l'étape 3 de stratification comme à l'exemple 1.

### EXEMPLE 5 :

On réalise une feuille selon l'exemple 4 mais le taux de silice par rapport au dioxyde de titane est de 15 %.

### Résultats :

Les données et résultats des tests relatifs aux exemples 1 à 5 sont présentés dans le Tableau 1.

Ces exemples montrent que les papiers selon l'invention ont une opacité supérieure pour un taux de cendres quasi identique et en conséquence moins de dioxyde de titane. En outre, ces papiers présentent une blancheur améliorée (diminution de l'indice jaune b* et augmentation de la luminosité L*).

### DESCRIPTION ET CONDITIONS DE REALISATION DES TESTS :

- Le taux de TiO₂ réel dans le Tableau 1 exprime le taux TiO₂ sans le traitement de surface donnant le grade lamifié et sans la silice des flocs le cas échéant.
- Le grammage des feuilles est déterminé selon la norme ISO 536 après conditionnement selon la norme ISO 187.
- La perméabilité à l'air, méthode porosité Gurley, est déterminée selon la norme ISO 5636-5R (1990).
- La teneur en cendres à 800°C est déterminée selon la norme française NF-Q-03.047 (Nov. 1971).

Les tests suivants sont réalisés sur le film décor (feuille imprégnée de résine) stratifié avec des feuilles de papier kraft formant la plaque haute pression :
- Les mesures des coordonnées colorimétriques L*, a*, b* dans le système CIELAB ont été mesurées pour définir la blancheur de la feuille après stratification sur un spectrocolorimètre ELREPHO 2000 dans le système CIE sous illuminant D65 (lumière du jour et sans UV) et sous un angle d'observation de 10 degrés.
- L'opacité est déterminée sur la face apparente du film décor comme suit : sur un spectrophotomètre ELREPHO 2000, sous l'illuminant C et sous un angle d'observation à 10 degrés, on mesure le coefficient de réflexion du film décoratif stratifié sur un fond kraft R₀ et le coefficient de réflexion R_{b} du film stratifié sur un fond blanc. L'opacité de l'échantillon est donnée par le rapport entre ces deux coefficients R₀ / R_{b} et est exprimée en pour cent.
- La tenue lumière est réalisée selon la norme ISO 4586-2.16 selon l'échelle des bleus. La présente invention fournit des feuilles décoratives qui une fois stratifiées présente une tenue à la lumière supérieure ou égale à 6 sur l'échelle des bleus.

La résistance à l'abrasion des stratifiés selon l'invention n'est pas altérée ou très peu altérée. Il n'apparaît pas de fissurations à leur surface et ils ont une bonne résistance à l'arrachage.

**TABLEAU 1**

| | Exemple 1 comparatif (témoin) | Exemple 2 comparatif | Exemple 3 comparatif | Exemple 4 | Exemple 5 |
|---|---|---|---|---|---|
| taux de cendres (%) dont: | 38 | 38 | 40 | 38 | 38 |
| dioxyde de titane grade lamifié | 38 | 36 | 38 | 0 | 0 |
| flocs de dioxyde de titane grade lamifié et SiO₂ | 0 | 0 | 0 | 38 | 38 |
| agent extendeur | 0 | 2 | 2 | 0 | 0 |
| grammage (g/m²) | 80 | 80 | 80 | 80 | 80 |
| épaisseur (µm) | 105 | 104 | 101 | 103 | 103 |
| poids de cendres (g/m²) | 30,4 | 30,4 | 32 | 30,4 | 30,4 |
| taux de TiO₂ réel (g/m²) | 28 | 26,5 | 28 | 25,2 | 23,8 |
| L* | 89,7 | 89,5 | 89,7 | 90 | 90 |
| a* | -1 | -1,1 | -1,2 | -1,1 | -1,1 |
| b* | 2,3 | 2,2 | 2,4 | 1,8 | 1,7 |
| porosité Gurley (s) | 13 | 13 | 16 | 15 | 16 |
| opacité sur plaque (%) | 92 | 92 | 92,5 | 93 | 94 |
| tenue lumière | ≥ 6 | ≥ 6 | ≥ 6 | ≥ 6 | ≥ 6 |

## Revendications

1. Feuille papetière décorative utilisable dans la fabrication des panneaux ou profilés décoratifs, comprenant de 5 à 50 %, en poids sec par rapport à la feuille, d'une composition de dioxyde de titane TiO2 et de silice SiO2 sous la forme de flocs minéraux mixtes dans lesquels des particules de TiO2 sont espacées les unes des autres par des agrégats de SiO2, lesdits flocs ayant été mûris, pour renforcer la solidité des liaisons établies entre les particules de TiO2 et les particules et/ou agrégats de SiO2, à une température comprise entre 60 et 100 °C pendant au moins trente minutes dans la dispersion aqueuse résultat du mélange d'une dispersion aqueuse de TiO2 et d'une dispersion aqueuse de silice SiO2, le mélange des deux dispersions étant effectué sous agitation et à pH compris entre les points isoélectriques respectifs desdits TiO2 et SiO2 et choisi de telle manière que lesdits TiO2 et SiO2 possèdent des charges de surface opposées et suffisamment différentes pour conduire, sous l'effet de forces électrostatiques, à leur agencement en des flocs minéraux mixtes dans lesquels les particules de TiO2 sont globalement espacées les unes des autres par des agrégats de SiO2, notamment entre 4,5 et 6,5, de préférence de l'ordre de 5,5.

2. Feuille décorative selon la revendication précédente, **caractérisée en ce que** ledit dioxyde de titane est de type rutile.

3. Feuille décorative selon l'une des revendications précédentes, **caractérisée en ce que** ledit dioxyde de titane TiO₂ est revêtu d'un traitement de surface minéral.

4. Feuille décorative selon la revendication 3, **caractérisée en ce que** le traitement de surface comprend au moins un composant choisi parmi les alumine, silice, zircone, phosphate, oxyde de cérium, oxyde de zinc, oxyde de titane et leurs mélanges.

5. Feuille décorative selon l'une des revendications précédentes, **caractérisée en ce que** la silice SiO₂ est utilisée à raison de 1 à 20 %, de préférence 5 à 15 %, en poids par rapport au poids de TiO₂.

6. Feuille décorative selon l'une des revendications précédentes, **caractérisée en ce que** la silice SiO₂ est utilisée à raison d'environ 10 à 15 % en poids par rapport au poids de TiO₂.

7. Feuille décorative selon l'une des revendications précédentes, **caractérisée en ce que** le TiO₂ est un TiO₂ rutile cationique.

8. Feuille décorative selon l'une des revendications précédentes, **caractérisée en ce que** la silice possède une surface spécifique comprise entre environ 20 et 300 m²/g.

9. Feuille décorative selon l'une des revendications précédentes, **caractérisée en ce que** la silice se présente sous la forme d'agrégats de taille comprise entre 0,5 et 10 µm.

10. Feuille décorative selon l'une des revendications précédentes, **caractérisée en ce que** la taille des particules de TiO₂ est comprise entre 0,1 et 1 µm.

11. Feuille décorative selon l'une des revendications précédentes, **caractérisée en ce que** ladite composition de dioxyde de titane et de silice est présente à un taux de 8 à 45 % en poids sec par rapport au poids de la feuille.

12. Feuille décorative selon l'une des revendications précédentes **caractérisée en ce qu'**elle comprend des fibres cellulosiques et éventuellement des fibres synthétiques, les fibres cellulosiques se répartissant en poids entre 40 à 100 %, de préférence 60 à 100 %, en fibres courtes et entre 0 à 60 %, de préférence 0 à 40 %, en fibres longues, 0,2 à 1 %, de préférence 0,4 à 0,6 %, d'un agent de résistance humide en poids sec par rapport au poids de la feuille.

13. Feuille décorative selon l'une des revendications précédentes, **caractérisée en ce que** le grammage de la feuille est de 40 à 150 g/m², de préférence de 60 à 100 g/m².

14. Feuille décorative selon l'une des revendications précédentes, **caractérisée en ce que** la feuille est blanche.

15. Feuille papetière décorative selon l'une des revendications précédentes, **caractérisée par le fait qu'**elle est imprégnée d'une résine thermodurcissable partiellement réticulée.

16. Feuille selon la revendication précédente, **caractérisée par le fait que** ladite résine est choisie parmi les résines mélamine-formaldéhyde, les résines urée-formaldéhyde, les résines benzoguanamine-formaldéhyde, les résines de polyester insaturé et leurs mélanges.

17. Feuille de papier décorative selon l'une des revendications 1 à 10, **caractérisée par le fait que** ladite feuille est une feuille de papier imprégné, dite feuille finie, qui comprend une feuille papetière de base comprenant:
- entre 40 à 90 % de fibres cellulosiques courtes et 10 à 60 % de fibres longues, la somme faisant 100 en poids,
- entre 0,2 et 1 %, en poids sec du papier imprégné, d'un agent de résistance humide,
- entre 5 et 25 %, en poids sec du papier imprégné, de ladite composition desdits frocs de dioxyde de titane et de silice tels que décrits dans les revendications 1 à 10,
et que ladite feuille papetière est imprégnée, à un taux de 15 à 30 % en poids sec du papier imprégné, d'une composition d'imprégnation choisie parmi les mélanges comprenant une résine thermodurcissable et les copolymères styrène-acrylate d'alkyle.

18. Feuille de papier décorative selon l'une des revendications 1 à 10, **caractérisée par le fait que** ladite feuille est une feuille de papier imprégné, dite feuille finie, qui comprend une feuille papetière de base comprenant:
- entre 40 à 90 % de fibres cellulosiques courtes et 10 à 60 % de fibres longues, la somme faisant 100 en poids,
- entre 0,2 et 1 %, en poids sec du papier imprégné, d'un agent de résistance humide,
- entre 5 et 25 %, en poids sec du papier imprégné, de ladite composition desdits flocs de dioxyde de titane et de silice tels que décrits dans les revendications 1 à 10,
et ladite feuille papetière est imprégnée, à un taux de 15 à 30 % en poids sec du papier imprégné, d'une composition d'imprégnation comprenant en mélange 5 à 50 parts en poids sec d'un liant choisi parmi les poly(alcool de vinyle), la gélatine, les amidons, les dérivés de cellulose, les alginates et leurs mélanges et 95 à 50 parts en poids sec d'un polymère réticulable présentant une température de transition vitreuse comprise entre -10 et 35°C et utilisé sous forme d'une dispersion aqueuse stable ou d'un copolymère styrène-acrylate d'éthyle-acrylate de butyle, la somme des parts faisant 100.

19. Procédé de fabrication par voie humide d'une feuille décorative selon l'une des revendications 1 à 18, **caractérisé en ce qu'**il comprend les étapes suivantes:
- sur une machine à papier, on forme une feuille, à partir d'une suspension aqueuse de fibres de cellulose et éventuellement de fibres synthétiques, et 5 à 50 % de ladite composition dedits flocs de dioxyde de titane et de silice tels que décrits dans les revendications 1 à 10, en poids sec par rapport à la feuille et éventuellement d'autres additifs usuellement employés pour ces feuilles,
- on essore et on sèche la feuille.

20. Procédé selon la revendication précédente, **caractérisé en ce qu'**il comprend les étapes suivantes :
- sur une machine à papier, on forme une feuille, à partir d'une suspension aqueuse de fibres de cellulose, ces fibres se répartissant, en poids, entre 40 à 100 % , de préférence 60 à 100 %, en fibres courtes et entre 0 à 60 %, de préférence 0 à 20 %, en fibres longues, 0,2 à 1 %, de préférence 0,4 à 0,6 %, d'un agent de résistance humide en poids sec par rapport à la feuille , et 5 à 50 % de ladite composition desdits flocs de dioxyde de titane et de silice, en poids sec par rapport à la feuille et éventuellement d'autres additifs usuellement employés pour ces feuilles,
- on essore et on sèche la feuille.

21. Procédé selon l'une des revendications 19 ou 20 , **caractérisé par le fait que** lesdits flocs ont été micronisés.

22. Procédé selon l'une des revendications 19 ou 20 , **caractérisé par le fait que** ladite composition desdits flocs de dioxyde de titane et de silice est introduite telle qu'obtenue en milieu aqueux.

23. Procédé de fabrication d'une feuille décorative imprégnée d'une résine thermodurcissable partiellement réticulée selon les revendications 15 ou 16, **caractérisé en ce qu'**on utilise une feuille selon l'une des revendications 1 à 14 ou obtenue selon l'une des revendications 19 à 22, que l'on imprègne ladite feuille avec une résine thermodurcissable et que l'on réticule partiellement la résine, le taux de composés volatils étant compris entre 5 et 8 % en poids de la feuille.

24. Panneau ou profilé décoratif stratifié **caractérisé par le fait qu'**il comporte comme feuille décorative une feuille selon l'une des revendications 1 à 18 ou obtenue selon l'une des revendications 19 à 22.

25. Panneau ou profilé décoratif stratifié selon la revendication précédente, **caractérisé en ce que** la tenue à la lumière est supérieure ou égale à 6 sur l'échelle des bleus selon la norme ISO 4586-2.16.

26. Panneau ou profilé décoratif stratifié selon les revendications 24 ou 25, comportant un support de base comme un panneau de particules ou de fibres agglomérées et une feuille décorative fixée à l'aide d'un adhésif à sa surface, **caractérisé par le fait que** ladite feuille décorative est une feuille telle que définie dans les revendications 17 ou 18 ou obtenue selon l'une des revendications 19 à 22.

27. Panneau ou profilé décoratif stratifié basse pression selon l'une des revendications 24 à 25, comportant un support de base comme un panneau de particules ou de fibres agglomérées et une feuille décorative stratifié directement sur le support de base, **caractérisé par le fait que** ladite feuille décorative est une feuille telle que définie dans la revendication 15 ou 16 ou obtenue selon l'une des revendications 19 à 22.

28. Panneau ou profilé décoratif stratifié haute pression selon les revendications 24 ou 25, comportant un support de base comme un panneau de particules ou de fibres agglomérées et une structure unitaire constituée de feuilles de papier kraft imprégnées d'une résine thermodurcissable et une feuille décorative imprégnée d'une résine thermodurcissable, l'unité étant fixée à l'aide d'un adhésif à la surface dudit stratifié, **caractérisé par le fait que** ladite feuille décorative est une feuille telle que définie dans la revendication 15 ou 16 ou obtenue selon l'une des revendications 19 à 22.

## Claims

1. Decorative paper sheet that can be used in the manufacture of decorative panels or profiles, comprising 5 to 50% by dry weight with respect to the sheet, of a titanium dioxide TiO₂/silica SiO₂ composition, in the form of mixed mineral flocs in which TiO₂ particles are spaced apart by SiO₂ aggregates, the said flocs having been matured, in order to increase the strength of the bonds established between the TiO₂ particles and the SiO₂ particles and/or aggregates, at a temperature between 60 and 100°C for at least thirty minutes in the aqueous dispersion resulting from mixing an aqueous TiO₂ dispersion with an aqueous silica SiO₂ dispersion, the mixing of the two dispersions being carried out with stirring and at a pH lying between the respective isoelectric points of the said TiO₂ and the said SiO₂ and chosen in such a way that the said TiO₂ and the said SiO₂ possess opposed surface charges sufficiently different to result, owing to the effect of electrostatic forces, in their arrangement as mixed mineral flocs in which the TiO₂ particles are everywhere spaced apart by SiO₂ aggregates, especially between 4.5 and 6.5, preferably around 5.5.

2. Decorative sheet according to the preceding claim, **characterized in that** the said titanium dioxide is of rutile type.

3. Decorative sheet according to either of the preceding claims, **characterized in that** said titanium dioxide TiO₂ is coated with a mineral surface treatment.

4. Decorative sheet according to Claim 3, **characterized in that** the surface treatment comprises at least one compound chosen from alumina, silica, zirconia, phosphate, cerium oxide, zinc oxide, titanium oxide and mixtures thereof.

5. Decorative sheet according to one of the preceding claims, **characterized in that** the silica SiO₂ is used in an amount from 1 to 20%, preferably 5 to 15%, by weight with respect to the weight TiO₂.

6. Decorative sheet according to one of the preceding claims, **characterized in that** the silica SiO₂ is used in an amount of about 10 to 15% by weight with respect to the weight TiO₂.

7. Decorative sheet according to one of the preceding claims, **characterized in that** the TiO₂ is a cationic rutile TiO₂.

8. Decorative sheet according to one of the preceding claims, **characterized in that** the silica possesses a specific surface area between about 20 and 300 m²/g.

9. Decorative sheet according to one of the preceding claims, **characterized in that** the silica is in the form of aggregates between 0.5 and 10 µm in size.

10. Decorative sheet according to one of the preceding claims, **characterized in that** the size of the TiO₂ particles is between 0.1 and 1 µm.

11. Decorative sheet according to one of the preceding claims, **characterized in that** the said titanium dioxide/silica composition is present in an amount from 8 to 45% by dry weight with respect to the weight of the sheet.

12. Decorative sheet according to one of the preceding claims, **characterized in that** it comprises cellulose fibres and possibly synthetic fibres, the cellulose fibres being distributed by weight between 40 to 100%, preferably 60 to 100%, as short fibres and between 0 to 60%, preferably 0 to 40% as long fibres, and 0.2 to 1%, preferably 0.4 to 0.6%, by dry weight with respect to the weight of the sheet, of a wet-strength agent.

13. Decorative sheet according to one of the preceding claims, **characterized in that** the grammage of the sheet is from 40 to 150 g/m², preferably from 60 to 100 g/m².

14. Decorative sheet according to one of the preceding claims, **characterized in that** the sheet is white.

15. Decorative paper sheet according to one of the preceding claims, **characterized in that** it is impregnated with a partially crosslinked thermosetting resin.

16. Sheet according to the preceding claim, **characterized in that** the said resin is chosen from melamine-formaldehyde resins, urea-formaldehyde resins, benzoguanamine-formaldehyde resins, unsaturated polyester resins and mixtures thereof.

17. Decorative paper sheet according to one of Claims 1 to 10, **characterized in that** the said sheet is an impregnated paper sheet, called finished sheet, which comprises a base paper sheet comprising:
- between 40 to 90% of short cellulose fibres and 10 to 60% of long fibres, the sum making 100 by weight;
- between 0.2 and 1%, by dry weight of the impregnated paper, of a wet-strength agent;
- between 5 and 25%, by dry weight of the impregnated paper, of the said composition of the said titanium dioxide and silica flocs as described in Claims 1 to 10
and **in that** the said paper sheet is impregnated, in an amount from 15 to 30% by dry weight of the impregnated paper, with an impregnation composition chosen from mixtures comprising a thermosetting resin and styrene-alkyl acrylate copolymers.

18. Decorative paper sheet according to one of Claims 1 to 10, **characterized in that** the said sheet is an impregnated paper sheet, called finished sheet, which comprises a base paper sheet comprising:
- between 40 to 90% of short cellulose fibres and 10 to 60% of long fibres, the sum making 100 by weight;
- between 0.2 and 1%, by dry weight of the impregnated paper, of a wet-strength agent;
- between 5 and 25%, by dry weight of the impregnated paper, of the said composition of the said titanium dioxide and silica flocs as described in Claims 1 to 10,
and the said paper sheet is impregnated, in an amount from 15 to 30% by dry weight of the impregnated paper, with an impregnation composition comprising, as a mixture, 5 to 50 parts by dry weight of a binder chosen from polyvinyl alcohol, gelatine, starches, cellulose derivatives, alginates and mixtures thereof and 95 to 50 parts by dry weight of a crosslinkable polymer having a glass transition temperature of between -10 and 35°C and used in the form of a stable aqueous dispersion or of a styrene-ethyl acrylate-butyl acrylate copolymer, the sum of the parts making 100.

19. Process for manufacturing a decorative sheet according to one of Claims 1 to 18 via a wet route, **characterized in that** it comprises the following steps:
- a sheet is formed on a papermaking machine from an aqueous suspension of cellulose fibres and possibly synthetic fibres, and 5 to 50% of the said composition of the said titanium dioxide and silica flocs as described in Claims 1 to 10, by dry weight with respect to the sheet, and possibly other additives usually employed for such sheets;
- the sheet is drained and dried.

20. Process according to the preceding claim, **characterized in that** it comprises the following steps:
- a sheet is formed on a papermaking machine from an aqueous suspension of cellulose fibres, these fibres being distributed, by weight, between 40 to 100%, preferably 60 to 100% as short fibres and between 0 to 60%, preferably 0 to 20% as long fibres, 0.2 to 1%, preferably 0.4 to 0.6%, of a wet-strength agent by dry weight with respect to the sheet and 5 to 50% of the said composition of the said titanium dioxide and silica flocs, by dry weight with respect to the sheet, and possibly other additives usually employed for such sheets;
- the sheet is drained and dried.

21. Process according to either of Claims 19 and 20, **characterized in that** the said flocs have been micronized.

22. Process according to either of Claims 19 and 20, **characterized in that** the said composition of the said titanium dioxide and silica flocs is introduced as obtained in aqueous medium.

23. Process for manufacturing a decorative sheet impregnated with a partially crosslinked thermosetting resin according to either of Claims 15 and 16, **characterized in that** a sheet according to one of Claims 1 to 14 or obtained according to one of Claims 19 to 22 is used, **in that** the said sheet is impregnated with a thermosetting resin and **in that** the resin is partially crosslinked, the content of volatile compounds being between 5 and 8% by weight of the sheet.

24. Laminated decorative profile or board, **characterized in that** it comprises, as decorative sheet, a sheet according to one of Claims 1 to 18 or obtained according to one of Claims 19 to 22.

25. Laminated decorative profile or board according to the preceding claim, **characterized in that** the lightfastness is greater than or equal to 6 on the scale of blues according to the ISO 4586-2.16 standard.

26. Laminated decorative profile or board according to either of Claims 24 and 25, comprising a base support as a particleboard or fibreboard and a decorative sheet fastened to its surface by means of an adhesive, **characterized in that** the said decorative sheet is a sheet as defined in either of Claims 17 and 18 or obtained according to one of Claims 19 to 22.

27. Low-pressure laminated decorative profile or board according to either of Claims 24 and 25, comprising a base support as a particleboard or fibreboard and a decorative sheet laminated directly on the base support, **characterized in that** the said decorative sheet is a sheet as defined in either of Claims 15 and 16 or obtained according to one of Claims 19 to 22.

28. High-pressure laminated decorative profile or board according to either of Claims 24 and 25, comprising a base support as particleboard or fibreboard and a unitary structure consisting of sheets of craft paper impregnated with a thermosetting resin and a decorative sheet impregnated with a thermosetting resin, the unit being fastened to the surface of the said laminate by means of an adhesive, **characterized in that** the said decorative sheet is a sheet as defined in either of Claims 15 and 16 or obtained according to one of Claims 19 to 22.

## Patentansprüche

1. Dekorationspapierbogen, der zur Verwendung bei der Herstellung von Dekorationsplatten oder -profilen geeignet ist, enthaltend 5 bis 50 Trockengew.-%, bezogen auf den Bogen, einer Zusammensetzung aus Titandioxid TiO₂ und Siliciumdioxid SiO₂ in Form von gemischten anorganischen Flocken, in denen die TiO₂-Teilchen durch SiO₂-Aggregate voneinander beabstandet sind, wobei die Flocken zur Erhöhung der Festigkeit der aufgebauten Bindungen zwischen den TiO₂-Teilchen und den SiO₂-Teilchen und/oder -Aggregaten in der durch Mischen einer wäßrigen Dispersion von TiO₂ und einer wäßrigen Dispersion von Siliciumdioxid SiO₂ erhaltenen wäßrigen Dispersion mindestens dreißig Minuten bei einer Temperatur zwischen 60 und 100°C gereift worden sind, wobei das Mischen der beiden Dispersionen unter Rühren bei einem pH-Wert erfolgt, der zwischen den isoelektrischen Punkten des TiO₂ bzw. SiO₂ liegt und so gewählt ist, daß das TiO₂ und SiO₂ entgegengesetzte Oberflächenladungen aufweisen, die so verschieden sind, daß sie sich unter dem Einfluß elektrostatischer Kräfte zu gemischten anorganischen Flocken zusammenlagern, in denen die TiO₂-Teilchen insgesamt durch SiO₂-Aggregate voneinander beabstandet sind, insbesondere zwischen 4,5 und 6,5, vorzugsweise bei etwa 5,5.

2. Dekorationsbogen nach dem vorhergehenden Anspruch, **dadurch gekennzeichnet, daß** das Titandioxid vom Rutil-Typ ist.

3. Dekorationsbogen nach einem der vorhergehenden Ansprüche, **dadurch gekennzeichnet, daß** das Titandioxid TiO₂ mit einem anorganischen Oberflächenüberzug überzogen ist.

4. Dekorationsbogen nach Anspruch 3, **dadurch gekennzeichnet, daß** der Oberflächenüberzug mindestens einen Bestandteil aus der Gruppe Aluminiumoxid, Siliciumdioxid, Zirconiumdioxid, Phosphat, Ceroxid, Zinkoxid, Titanoxid und Gemischen davon enthält.

5. Dekorationsbogen nach einem der vorhergehenden Ansprüche, **dadurch gekennzeichnet, daß** das Siliciumdioxid SiO₂ in einem Anteil von 1 bis 20 Gew.-%, vorzugsweise 5 bis 15 Gew.-%, bezogen auf das Gewicht von TiO₂, verwendet wird.

6. Dekorationsbogen nach einem der vorhergehenden Ansprüche, **dadurch gekennzeichnet, daß** das Siliciumdioxid SiO₂ in einem Anteil von 10 bis 15 Gew.-%, bezogen auf das Gewicht von TiO₂, verwendet wird.

7. Dekorationsbogen nach einem der vorhergehenden Ansprüche, **dadurch gekennzeichnet, daß** es sich bei dem TiO₂ um kationisches Rutil-TiO₂ handelt.

8. Dekorationsbogen nach einem der vorhergehenden Ansprüche, **dadurch gekennzeichnet, daß** das Siliciumdioxid eine spezifische Oberfläche zwischen etwa 20 und 300 m²/g aufweist.

9. Dekorationsbogen nach einem der vorhergehenden Ansprüche, **dadurch gekennzeichnet, daß** das Siliciumdioxid in Form von Aggregaten mit einer Größe zwischen 0,5 und 10 µm vorliegt.

10. Dekorationsbogen nach einem der vorhergehenden Ansprüche, **dadurch gekennzeichnet, daß** die Größe der TiO₂-Teilchen zwischen 0,1 und 1 µm liegt.

11. Dekorationsbogen nach einem der vorhergehenden Ansprüche, **dadurch gekennzeichnet, daß** die Zusammensetzung aus Titandioxid und Siliciumdioxid in einer Menge von 8 bis 45 Trockengew.-%, bezogen auf das Gewicht des Bogens, vorliegt.

12. Dekorationsbogen nach einem der vorhergehenden Ansprüche, **dadurch gekennzeichnet, daß** er Cellulosefasern und gegebenenfalls Kunstfasern, wobei die Cellulosefasern sich aus 40 bis 100 Gew.-%, vorzugsweise 60 bis 100 Gew.-%, Kurzfasern und 0 bis 60 Gew.-%, vorzugsweise 0 bis 40 Gew.-%, Langfasern zusammensetzen, und 0,2 bis 1 Trockengew.-%, vorzugsweise 0,4 bis 0,6 Trockengew.-%, bezogen auf das Gewicht des Bogens, eines Naßfestmittels enthält.

13. Dekorationsbogen nach einem der vorhergehenden Ansprüche, **dadurch gekennzeichnet, daß** er eine Flächenmasse von 40 bis 150 g/m², vorzugsweise 60 bis 100 g/m², aufweist.

14. Dekorationsbogen nach einem der vorhergehenden Ansprüche, **dadurch gekennzeichnet, daß** er weiß ist.

15. Dekorationspapierbogen nach einem der vorhergehenden Ansprüche, **dadurch gekennzeichnet, daß** er mit einem teilvernetzten hitzehärtbaren Harz überzogen ist.

16. Bogen nach dem vorhergehenden Anspruch, **dadurch gekennzeichnet, daß** das Harz unter Melamin-Formaldehyd-Harzen, Harnstoff-Formaldehyd-Harzen, Benzoguanamin-Formaldehyd-Harzen, ungesättigten Polyesterharzen und Gemischen davon ausgewählt ist.

17. Dekorationspapierbogen nach einem der Ansprüche 1 bis 10, **dadurch gekennzeichnet, daß** es sich bei dem Bogen um einen Bogen aus imprägniertem Papier, der als ausgerüsteter Bogen bezeichnet wird, handelt, der einen Grundpapierbogen mit:
- zwischen 40 und 90% Cellulosekurzfasern und 10 bis 60% Langfasern, wobei die Summe sich auf 100 Gew.-% beläuft,
- zwischen 0,2 und 1 Trockengew.-%, bezogen auf das imprägnierte Papier, eines Naßfestmittels,
- zwischen 5 und 25 Trockengew.-%, bezogen auf das imprägnierte Papier, der Zusammensetzung aus den Flocken aus Titandioxid und Siliciumdioxid gemäß den Ansprüchen 1 bis 10,
enthält, und daß der Papierbogen mit 15 bis 30 Trockengew.-%, bezogen auf das imprägnierte Papier, einer unter ein hitzehärtbares Harz und Styrol-Alkylacrylat-Copolymere enthaltenden Gemischen ausgewählten Imprägnierzusammensetzung imprägniert ist.

18. Dekorationspapierbogen nach einem der Ansprüche 1 bis 10, **dadurch gekennzeichnet, daß** es sich bei dem Bogen um einen Bogen aus imprägniertem Papier, der als ausgerüsteter Bogen bezeichnet wird, handelt, der einen Grundpapierbogen mit:
- zwischen 40 und 90% Cellulosekurzfasern und 10 bis 60% Langfasern, wobei die Summe sich auf 100 Gew.-% beläuft,
- zwischen 0,2 und 1 Trockengew.-%, bezogen auf das imprägnierte Papier, eines Naßfestmittels,
- zwischen 5 und 25 Trockengew.-%, bezogen auf das imprägnierte Papier, der Zusammensetzung aus den Flocken aus Titandioxid und Siliciumdioxid gemäß den Ansprüchen 1 bis 10,
enthält, und daß der Papierbogen mit 15 bis 30 Trockengew.-%, bezogen auf das imprägnierte Papier, einer Imprägnierzusammensetzung imprägniert ist, die eine Mischung aus 5 bis 50 Trockengewichtsteilen eines unter Polyvinylalkohol, Gelatine, Stärken, Cellulosederivaten, Alginaten und Gemischen davon ausgewählten Bindemittels und 95 bis 50 Trockengewichtsteile eines vernetzbaren Polymers, das eine Glasübergangstemperatur zwischen -10 und 35°C aufweist und in Form einer stabilen wäßrigen Dispersion eingesetzt wird, oder eines Styrol-Ethylacrylat-Butylacrylat-Copolymers enthält, wobei die Summe der Teile sich auf 100 beläuft.

19. Verfahren zur Herstellung eines Dekorationsbogens nach einem der Ansprüche 1 bis 18 auf nassem Wege, bei dem man:
- auf einer Papiermaschine aus einer wäßrigen Suspension von Cellulosefasern und gegebenenfalls Kunstfasern und 5 bis 50 Trockengew.-% der Zusammensetzung aus den Flocken aus Titandioxid und Siliciumdioxid gemäß den Ansprüchen 1 bis 10, bezogen auf den Bogen, und gegebenenfalls anderen, für diese Bögen üblichen Additiven einen Bogen herstellt und
- den Bogen entwässert und trocknet.

20. Verfahren nach dem vorhergehenden Anspruch, bei dem man:
- auf einer Papiermaschine aus einer wäßrigen Suspension von Celluosefasern, die sich aus 40 bis 100 Gew.-%, vorzugsweise 60 bis 100 Gew.-%, Kurzfasern und 0 bis 60 Gew.-%, vorzugsweise 0 bis 20 Gew.-%, Langfasern zusammensetzen, 0,2 bis 1 Trockengew.-%, vorzugsweise 0,4 bis 0,6 Trockengew.-%, eines Naßfestmittels, bezogen auf den Bogen, und 5 bis 50 Trockengew.-% der Zusammensetzung aus den Flocken aus Titandioxid und Siliciumdioxid, bezogen auf den Bogen, und gegebenenfalls anderen, für diese Bögen üblichen Additiven einen Bogen herstellt und
- den Bogen entwässert und trocknet.

21. Verfahren nach Anspruch 19 oder 20, **dadurch gekennzeichnet, daß** man die Flocken mikronisiert.

22. Verfahren nach Anspruch 19 oder 20, **dadurch gekennzeichnet, daß** man die Zusammensetzung aus den Flocken aus Titandioxid und Siliciumdioxid so einträgt, wie sie im wäßrigen Medium erhalten wurde.

23. Verfahren zur Herstellung eines mit einem teilvernetzten hitzehärtbaren Harz imprägnierten Dekorationsbogens nach Anspruch 15 oder 16, **dadurch gekennzeichnet, daß** man einen Bogen nach einem der Ansprüche 1 bis 14 oder einen gemäß einem der Ansprüche 19 bis 22 erhaltenen Bogen verwendet, den Bogen mit einem hitzehärtbaren Harz imprägniert und das Harz teilvernetzt, wobei der Gehalt an flüchtigen Bestandteilen zwischen 5 und 8 Gew.-%, bezogen auf den Bogen, liegt.

24. Dekorationslaminatplatte oder -profil, **dadurch gekennzeichnet, daß** sie als Dekorativbogen einen Bogen nach einem der Ansprüche 1 bis 18 oder einen gemäß einem der Ansprüche 19 bis 22 erhaltenen Bogen enthält.

25. Dekorationslaminatplatte oder -profil nach dem vorhergehenden Anspruch, **dadurch gekennzeichnet, daß** die Lichtechtheit größer gleich 6 nach Blauskala gemäß ISO-Norm 4586-2.16 ist.

26. Dekorationslaminatplatte oder -profil nach Anspruch 24 oder 25 mit einem Grundträger wie einer Spanplatte oder einer Faserplatte und einem mit Hilfe eines Klebstoffs auf deren Oberfläche befestigten Dekorationsbogen, **dadurch gekennzeichnet, daß** es sich bei dem Dekorationsbogen um einen Bogen nach Anspruch 17 oder 18 oder einen gemäß einem der Ansprüche 19 bis 22 erhaltenen Bogen handelt.

27. Niederdruck-Dekorationslaminatplatte oder -profil nach Anspruch 24 oder 25 mit einem Grundträger wie einer Spanplatte oder einer Faserplatte und einem direkt auf dem Grundträger angeordneten Dekorationslaminatbogen, **dadurch gekennzeichnet, daß** es sich bei dem Dekorationsbogen um einen Bogen nach Anspruch 15 oder 16 oder einen gemäß einem der Ansprüche 19 bis 22 erhaltenen Bogen handelt.

28. Hochdruck-Dekorationslaminatplatte oder -profil nach Anspruch 24 oder 25 mit einem Grundträger wie einer Spanplatte oder einer Faserplatte und eines Einheitsgebildes aus Kraftpapierbögen, die mit einem hitzehärtbaren Harz imprägniert sind, und einem Dekorationsbogen, der mit einem hitzehärtbaren Harz imprägniert ist, wobei die Einheit mit Hilfe eines Klebstoffs auf der Oberfläche des Laminats befestigt ist, **dadurch gekennzeichnet, daß** es sich bei dem Dekorationsbogen um einen Bogen nach Anspruch 15 oder 16 oder einen gemäß einem der Ansprüche 19 bis 22 erhaltenen Bogen handelt.
